## Europäisches Patentamt

## European Patent Office

## Office européen des brevets

(19)

(11) **EP 1 434 671 B1**

(12) **EUROPÄISCHE PATENTSCHRIFT**

(45) Veröffentlichungstag und Bekanntmachung des Hinweises auf die Patenterteilung:
**01.02.2006 Patentblatt 2006/05**

(21) Anmeldenummer: **02776770.6**

(22) Anmeldetag: **02.10.2002**

(51) Int Cl.:
**B25J 9/16** *(2006.01)*    **G05B 19/4061** *(2006.01)*

(86) Internationale Anmeldenummer:
**PCT/DE2002/003738**

(87) Internationale Veröffentlichungsnummer:
**WO 2003/033218 (24.04.2003 Gazette 2003/17)**

(54) **VERFAHREN UND ANORDNUNG SOWIE COMPUTERPROGRAMM MIT PROGRAMMCODE-MITTELN UND COMPUTERPROGRAMM-PRODUKT ZUR ZUWEISUNG EINER TEILFLÄCHE EINER IN MEHRERE TEILFLÄCHEN AUFGETEILTEN GESAMTFLÄCHE AN EINE VON MEHREREN MOBILEN EINHEITEN**

METHOD, ARRANGEMENT AND COMPUTER PROGRAMME WITH PROGRAMME-CODING MEANS AND COMPUTER PROGRAMME PRODUCT FOR ALLOCATING A PARTIAL SURFACE OF A TOTAL SURFACE DIVIDED INTO SEVERAL PARTIAL SURFACES ON ONE OF SEVERAL MOBILE UNITS

PROCEDE, SYSTEME ET PROGRAMME INFORMATIQUE A ELEMENTS DE CODE DE PROGRAMME ET PRODUIT DE PROGRAMME INFORMATIQUE POUR ASSIGNER UNE SURFACE PARTIELLE D'UNE SURFACE GLOBALE REPARTIE EN PLUSIEURS SURFACES PARTIELLES A UNE UNITE MOBILE PARMI PLUSIEURS UNITES MOBILES

(84) Benannte Vertragsstaaten:
**DE FR GB**

(30) Priorität: **11.10.2001 DE 10150423**

(43) Veröffentlichungstag der Anmeldung:
**07.07.2004 Patentblatt 2004/28**

(73) Patentinhaber: **SIEMENS AKTIENGESELLSCHAFT
80333 München (DE)**

(72) Erfinder: **JÄGER, Markus
80803 München (DE)**

(56) Entgegenhaltungen:
**WO-A-02/082195        DE-A- 19 804 195
US-A- 5 819 008**

- **JAEGER M ET AL: "DECENTRALIZED COLLISION AVOIDANCE, DEADLOCK DETECTION AND DEADLOCK RESOLUTION FOR MULTIPLE MOBILE ROBOTS" , PROCEEDINGS OF THE 2001 IEEE/RSJ INTERNATIONAL CONFERENCE ON INTELLIGENT ROBOTS AND SYSTEMS. (IROS 2001). MAUI, HAWAII, OCT. 29 - NOV. 3, 2001, IEEE/RSJ INTERNATIONAL CONFERENCE ON INTELLIGENT ROBOTS AND SYSTEMS, NEW YORK, NY: IEEE, US, VOL. VOL. 3 O XP001105220 ISBN: 0-7803-6612-3 Absätze [0004]-[0006]; Abbildungen 1-7**
- **ARAI Y ET AL: "Adaptive behavior acquisition of collision avoidance among multiple autonomous mobile robots" , INTELLIGENT ROBOTS AND SYSTEMS, 1997. IROS '97., PROCEEDINGS OF THE 1997 IEEE/RSJ INTERNATIONAL CONFERENCE ON GRENOBLE, FRANCE 7-11 SEPT. 1997, NEW YORK, NY, USA,IEEE, US, PAGE(S) 1762-1767 XP010264878 ISBN: 0-7803-4119-8 Absätze [0003],[0004]; Abbildungen 3,4**

• SCHNEIDER-FONTAN M ET AL: "TERRITORIAL MULTI-ROBOT TASK DIVISION" , IEEE TRANSACTIONS ON ROBOTICS AND AUTOMATION, IEEE INC, NEW YORK, US, VOL. 14, NR. 5, PAGE(S) 815-822 XP000779479 ISSN: 1042-296X Absätze [0005],[0006]; Abbildungen 5-7

**Beschreibung**

Die Erfindung betrifft eine Zuweisung einer Teilfläche einer in mehrere Teilflächen aufgeteilten Gesamtfläche an eine von mehreren mobilen Einheiten.

Eine Aufteilung einer Gesamtfläche in mehrere Teilflächen und anschließende Zuweisung einer oder mehrerer dieser Teilflächen an mobile Einheiten erfolgt in der Regel, wenn mehrere mobile Einheiten gemeinsam und koordiniert eine größere Gesamtfläche bearbeiten, beispielsweise bei einer Reinigung einer Halle durch mehrere Reinigungsroboter [1].

Für die Aufteilung der Gesamtfläche und die Zuweisung der Teilflächen an die mehreren Roboter werden unterschiedliche Verfahren bzw. Ansätze verwendet. Es werden verwendet ein statischer Ansatz bzw. statisches Verfahren und ein dynamischer Ansatz bzw. dynamisches Verfahren.

Bei einem statischen Verfahren, d.h. bei einer statischen Aufteilung und Zuweisung, wird jeder mobilen Einheit vor Beginn einer von den mobilen Einheiten gemeinsam durchzuführenden Tätigkeit eine vorab bestimmte Teilfläche einer Gesamtfläche fest zugewiesen, welche Zuweisung während der Tätigkeit nicht mehr verändert wird.

Verschiedene solcher statischen Verfahren, welche sich lediglich in der Art und Weise der Aufteilung der Gesamtfläche in Teilflächen unterscheiden, sind aus [2], [3], [4], [5], [6] und [7] bekannt.

Aus [2] und [3] ist bekannt, eine Gesamtfläche in n gleich große, zusammenhängende Teilflächen zu zerlegen, wobei jede Teilfläche einen bestimmten Punkt enthalten muss, nämlich einen Startpunkt eines für die jeweilige Teilfläche zuständigen Roboters.

Die aus [2] und [3] bekannten statischen Verfahren sind mathematisch korrekt, liefern jedoch oft für die Praxis unbrauchbare Teilflächen bzw. von Robotern zu bearbeitende Gebiete.

Bei dem aus [4] bekannten statischen Ansatz werden deshalb gleich große Teilflächen einer Gesamtfläche gesucht bzw. bestimmt, welche möglichst keine spitzen Winkel enthalten, so dass sie von Robotern besser bearbeitet werden können.

Bei den aus [5], [6] und [7] bekannten statischen Verfahren werden hingegen Teilflächen einer Gesamtfläche bestimmt, die jeweils einen möglichst kleinen Durchmesser und damit in der Regel auch einen kleinen Umfang haben. Dadurch wird beabsichtigt, dass Roboter, welche jeweils eine von den Teilflächen bearbeiten, sich an einem Rand ihrer zu bearbeitenden Teilfläche seltener begegnen und deshalb die Gefahr einer Kollision verringert wird.

Ein wesentlicher Nachteil dieser bekannten statischen Verfahren ist - insbesondere durch die feste Zuweisung von Teilflächen bei diesen Verfahren - dass derartige Verfahren äußerst unflexibel sind und sich nicht dynamisch an neue Situationen anpassen können.

Falls beispielsweise einer von mehreren Robotern ausfällt, wird dessen Arbeit bzw. dessen zu bearbeitende Teilfläche nicht von einem der anderen Robotern übernommen. Diese Teilfläche bleibt in diesem Fall unbearbeitet.

Im Gegensatz dazu steht das dynamische Verfahren, d.h. eine dynamische Aufteilung und Zuweisung von Teilflächen.

Hierbei werden die Teilflächen erst während einer Tätigkeit der mobilen Einheiten aufgeteilt. Die Zuweisung der Teilflächen erfolgt in mehreren, zeitlich versetzten Stufen.

Diese Dynamik führt dazu, dass sich während der Tätigkeit der mobilen Einheiten die jeweils einer mobilen Einheit zugewiesen Teilflächen dynamisch verändern. Somit liegt in diesem Fall keine vorab fest definierte Arbeitsaufgabe für die mobilen Einheiten vor, sondern diese wird erst während der Tätigkeit der mobilen Einheiten Umgebungsbedingungen und/oder Randbedingungen dynamisch angepasst.

Ein Nachteil der dynamischen Aufteilung und Zuweisung von Teilflächen besteht darin, dass die mobilen Einheiten in regelmäßigem Kommunikationskontakt miteinander stehen müssen, um Informationen bzw. Veränderungen einander mitzuteilen. Diese Kommunikation wird üblicherweise durch ein globales Kommunikationsnetz, über welches die mobilen Einheiten miteinander kommunizieren, realisiert.

Ein solches, zumindest teilweise dynamisches Verfahren ist aus [8] bekannt.

Bei dem aus [8] bekannten gemischtdynamischen Verfahren, welches einen statischen Ansatz mit einem dynamischen Ansatz kombiniert, wird eine Gesamtfläche vor Beginn einer Bearbeitungstätigkeit von mobilen Einheiten in (n+1) Teilflächen aufgeteilt. n Teilflächen werden gemäß dem oben beschriebenen statischen Ansatz auf die mobilen Einheiten verteilt. Die (n+1)te Teilfläche wird am Ende der Bearbeitungstätigkeit dynamisch zwischen den mobilen Einheiten aufgeteilt.

Da aber dieses gemischtdynamische Verfahren überwiegend statische Verfahrensanteile aufweist, unterliegt es auch oben beschriebenen Nachteilen solcher statischen Verfahren.

Somit liegt der Erfindung die Aufgabe zugrunde, ein Verfahren zur Zuweisung einer Teilfläche einer in mehrere Teilflächen aufgeteilten Gesamtfläche an eine von mehreren zusammenwirkenden, mobilen Einheiten anzugeben, welches Verfahren flexibel, auch während einer Bearbeitung der Gesamtfläche durch die mobilen Einheiten, an veränderte oder sich verändernde Randbedingungen anpassbar ist.

Die Aufgabe wird durch das Verfahren und die Anordnung sowie durch das Computerprogramm mit Programmcode-Mitteln und das Computerprogramm-Produkt zur Zuweisung von Teilflächen einer zu bearbeitenden und in Teilflächen aufgeteilten Gesamtfläche an mehrere mobile Einheiten mit den Merkmalen gemäß dem jeweiligen unabhängigen Patentanspruch gelöst.

Bei dem Verfahren zur Zuweisung einer Teilfläche einer in mehrere Teilflächen aufgeteilten Gesamtfläche an eine von mehreren mobilen Einheiten wird eine Teilfläche der in mehrere Teilflächen aufgeteilten Gesamtfläche bestimmt und der einen von den mehreren mobilen Einheiten unter einem Vorbehalt zugewiesen.

Die eine von den mehreren mobilen Einheiten sendet eine Zuweisungsinformation aus, welche Zuweisungsinformation die Zuweisung der Teilfläche der in mehrere Teilflächen aufgeteilten Gesamtfläche an die eine von den mehreren mobilen Einheiten anzeigt.

Der Vorbehalt wird aufgehoben und die Zuweisung der Teilfläche wird gültig, wenn die eine von den mehreren mobilen Einheiten keine Zuweisungsablehnungsinformation von mindestens einer weiteren von den mehreren mobilen Einheiten empfängt, welche Zuweisungsablehnungsinformation eine Ablehnung der Zuweisung der Teilfläche anzeigt. Andernfalls wird der Vorbehalt aufgehoben und die Zuweisung der Teilfläche wird ungültig.

Die Anordnung zur Zuweisung einer Teilfläche einer in mehrere Teilflächen aufgeteilten Gesamtfläche an eine von mehreren mobilen Einheiten weist eine Zuweisungseinheit auf, mit welcher die zuzuweisende Teilfläche bestimmbar und diese der einen von den mehreren mobilen Einheiten unter einem Vorbehalt zuweisbar ist.

Ferner weist die Anordnung auf eine Kommunikationseinheit, mit welcher eine Zuweisungsinformation aussendbar ist, welche Zuweisungsinformation die Zuweisung dieser Teilfläche der in mehrere Teilflächen aufgeteilten Gesamtfläche an die eine von den mehreren mobilen Einheiten anzeigt.

Die Zuweisungseinheit ist ferner derart eingerichtet, dass der Vorbehalt aufhebbar ist und die Zuweisung der Teilfläche gültig wird, wenn die eine von den mobilen Einheiten keine Zuweisungsablehnungsinformation von mindestens einer weiteren von den mehreren mobilen Einheiten empfängt, welche Zuweisungsablehnungsinformation eine Ablehnung der Zuweisung dieser Teilfläche anzeigt, andernfalls der Vorbehalt aufhebbar ist und die Zuweisung dieser Teilfläche ungültig wird.

Das Computerprogramm mit Programmcode-Mitteln ist eingerichtet, um alle Schritte gemäß dem erfindungsgemäßen Verfahren durchzuführen, wenn das Programm auf einem Computer ausgeführt wird.

Das Computerprogramm-Produkt mit auf einem maschinenlesbaren Träger gespeicherten Programmcode-Mitteln ist eingerichtet, um alle Schritte gemäß dem erfindungsgemäßen Verfahren durchzuführen, wenn das Programm auf einem Computer ausgeführt wird.

Dabei sind bei der Erfindung durch das Computerprogramm sowie durch das Computerprogramm-Produkt auch solche Computerprogramme bzw. Computerprogramm-Produkte mitumfasst, welche dezentral, d.h. über mehrere Systeme verteilt bzw, auf mehrere einzelne Computerprogramme bzw. Computerprogramm-Produkte aufgeteilt sind, realisiert sind und in ihrer Gesamtheit bzw. in ihrem gesamtheitlichen Zusammenwirken das erfindungsgemäße Verfahren ausführen..

Die Anordnung sowie das Computerprogramm mit Programmcode-Mitteln, eingerichtet um alle Schritte gemäß dem erfinderischen Verfahren durchzuführen, wenn das Programm auf einem Computer ausgeführt wird, sowie das Computerprogramm-Produkt mit auf einem maschinenlesbaren Träger gespeicherten Programmcode-Mitteln, eingerichtet um alle Schritte gemäß dem erfinderischen Verfahren durchzuführen, wenn das Programm auf einem Computer ausgeführt wird, sind insbesondere geeignet zur Durchführung des erfindungsgemäßen Verfahrens oder einer seiner nachfolgend erläuterten Weiterbildungen.

Bevorzugte Weiterbildungen der Erfindung ergeben sich aus den abhängigen Ansprüchen.

Die im weiteren beschriebenen Weiterbildungen beziehen sich sowohl auf die Verfahren als auch auf die Anordnung.

Die Erfindung und die im weiteren beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer im weiteren beschriebenen Weiterbildung möglich durch ein computerlesbares Speichermedium, auf welchem das Computerprogramm mit Programmcode-Mitteln gespeichert ist, welches die Erfindung oder Weiterbildung ausführt.

Auch kann die Erfindung oder jede im weiteren beschriebene Weiterbildung durch ein Computerprogrammerzeugnis realisiert sein, welches ein Speichermedium aufweist, auf welchem das Computerprogramm mit Programmcode-Mitteln gespeichert ist, welches die Erfindung oder Weiterbildung ausführt.

In einer Ausgestaltung erfolgt die Bestimmung und/oder die Zuweisung der Teilfläche unter Vorbehalt, wenn die eine von den mehreren mobilen Einheiten einen vorgebbaren Zuweisungsabstand oder einen geringeren Abstand als den vorgebaren Zuweisungsabstand zu der Teilfläche aufweist.

Ferner kann die Bestimmung und/oder die Zuweisung der Teilfläche unter Vorbehalt aktiv durch die eine von den mehreren mobilen Einheiten, d.h. durch Anforderung der Teilfläche durch die eine von den mehreren mobilen Einheiten, oder auch passiv, d.h. durch Zuweisung an die eine von den mehreren mobilen Einheiten durch Dritte, erfolgen.

In einer weiteren Ausgestaltung erfolgt die Bestimmung und/oder Zuweisung der Teilfläche unter Vorbehalt während einer Bearbeitung von weiteren Teilflächen der Gesamtfläche durch die mehreren mobilen Einheiten. Dadurch können Unterbrechungen oder Verzögerungen bei der Bearbeitung der Teilflächen vermieden werden.

Auch kann die Zuweisungsinformation eine Wichtigkeitsinformation der zuzuweisenden Teilfläche aufweisen, welche beschreibt, wie wichtig die Zuweisung der zuzuweisenden Teilfläche für die eine von den mehreren mobilen Einheiten ist.

Für die Bestimmung der der einen von den mehreren mobilen Einheiten zuzuweisenden Teilfläche kann ein Connectivity-Graph, welcher aus [9] bekannt ist, eingesetzt werden.

Auch ist es zweckmäßig,- weil bearbeitungstechnisch günstig - die unter Vorbehalt zuzuweisende Teilfläche derart zu bestimmen, dass die Bearbeitungsfläche ein möglichst kompaktes Gebiet ergibt.

Auch kann die der einen von den mehreren mobilen Einheiten zugewiesene Teilfläche mit weiterer der einen von den mehreren mobilen Einheiten zugewiesenen Teilflächen zu einem Bearbeitungsgebiet zusammengefasst werden.

Für eine solche Bearbeitungsfläche kann unter Verwendung eines Bahnplanungsverfahren eine Bearbeitungsbahn für die eine von den mehreren mobilen Einheiten ermittelt werden.

Bahnplanungsverfahren sind beispielsweise aus [12] oder aus [13] bekannt.

Außerdem ist es bearbeitungstechnisch zweckmäßig, wenn jede der mehreren mobilen Einheiten eine Karte der Gesamtfläche speichert, in welcher mindestens die der jeweiligen mobilen Einheit zugewiesenen Teilflächen eingetragen werden.

In die Karte der einen von den mehreren mobilen Einheiten wird dann zusätzlich die zugewiesene Teilfläche eingetragen.

In einer Weiterbildung erfolgt ein Informationsaustausch zwischen den mehreren mobilen Einheiten derart, dass die mehreren mobilen Einheiten dann Informationen miteinander austauschen, wenn jeweils zwei von den mehreren mobilen Einheiten in der Lage sind, zu kommunizieren. Solches ist möglich, wenn zwei für eine Kommunikation eingerichtete, d.h. für ein Senden und für ein Empfangen von Nachrichten eingerichtete, mobile Einheiten einen vorgebbaren Kommunikationsabstand oder einen geringeren Abstand als den vorgebaren Kommunikationsabstand zueinander aufweisen.

In diesem Fall ist kein globales Kommunikationsnetz notwendig. Die Informationen werden sukzessive von einer der mehreren mobilen Einheiten an eine andere der mehreren mobilen Einheiten weitergegeben.

Durch diesen Informationsaustausch wird ein Kartenabgleich der Karten der mehreren mobilen Einheiten durchgeführt.

Außerdem kann ein Einigungsverfahren durchgeführt werden, wenn die der einen von den mehreren mobilen Einheiten zugewiesene Teilfläche bereits einer anderen von den mehreren mobilen Einheiten zugewiesen worden ist. Bei diesem Einigungsverfahren wird dann diese Teilfläche einer der beiden mobilen Einheiten endgültig zugewiesen.

In einer Ausgestaltung wird die Erfindung eingesetzt bei einer Reinigung einer Gesamtfläche durch mehrere Reinigungsroboter. In diesem Fall sind die mehreren mobilen Einheiten die Reinigungsroboter. Die zureinigende Gesamtfläche ist die Gesamtfläche.

In Figuren ist ein Ausführungsbeispiel der Erfindung dargestellt, welches im weiteren näher erläutert wird.

Es zeigen

Figur 1    Skizze eines zu reinigenden Raums 100 mit einer Unterteilung in Polygone 101 gemäß einem Ausführungsbeispiels

Figur 2a    Skizze eines Teils 200 eines zu reinigenden Raums 100 mit einer Unterteilung in Polygone 101, 202, 203 gemäß einem Ausführungsbeispiel

Figur 2b    Skizze eines zugehörigen Connectivity-Graphen 210 für den Teil eines zu reinigenden Raums gemäß einem Ausführungsbeispiel

Figur 3    Skizze eines zu reinigenden Raums 100 mit drei Reinigungsroboter 304, mit Kommunikationsabständen 305 der drei Roboter 304 sowie mit zugewiesenen, gereinigten Teilflächen 301, mit zugewiesenen, nicht gereinigten Teilflächen 302 und nicht zugewiesenen, nicht gereinigten Teilflächen 303 gemäß einem Ausführungsbeispiel

Figur 4    Skizze eines zu reinigenden Raums 100 mit zwei isolierten Teilflächen 401 (Polygone) gemäß einem Ausführungsbeispiel

Figur 5    Skizze mit einem Grundriss 500 eines zu reinigenden Supermarkts

Figur 6          Skizze mit tabellarische dargestellten Simulationsergebnissen 600

Figur 7          Verfahrensschritte 701 bis 705 bei einer Zuweisung einer Teilfläche gemäß einem Ausführungsbeispiel

Ausführungsbeispiel: Reinigung einer Fläche bzw. eines Raums durch mehrere Reinigungsroboter

Die im Folgenden im Rahmen des Ausführungsbeispiels beschriebene Vorgehensweise basiert auf einer dynamischen Aufteilung eines zu reinigenden Raumes.

Grundlagen der Vorgehensweise

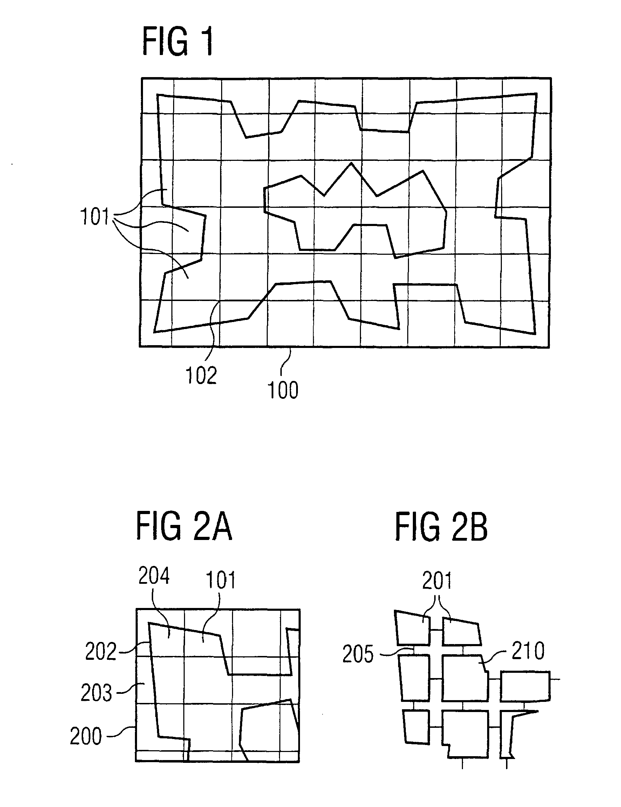

Grundidee, welche der nachfolgend beschriebenen Vorgehensweise zugrunde liegt, ist, den zu reinigenden Raum 100 in einzelne Polygone 101, d.h. Teilflächen 101, zu unterteilen, wie in Figur 1 dargestellt.

Die einzelnen Roboter allokieren und reinigen dann diese Polygone 101. Ein Polygon 101 allokieren bedeutet dabei, dass ein Roboter sich vornimmt eine bestimmtes Polygon 101 zu reinigen und dies bekannt gibt.

Im Gegensatz zu anderen bekannten dynamischen Verfahren setzt die nachfolgend beschrieben Vorgehensweise nicht voraus, dass die einzelnen Roboter immer in der Lage sind miteinander zu kommunizieren. Es wird also kein globales Kommunikationsnetz benötigt. Es ist vollkommen ausreichend wenn die Roboter hin und wieder einmal kommunizieren können, um Informationen auszutauschen.

Vorgehensweise

Die Vorgehensweise bei dem Ausführungsbeispiel basiert auf einer dynamischen Aufteilung des zu reinigenden Raums 100. Der Raum 100 wird zunächst in Polygone 101 aufgeteilt. Danach werden einzelne Polygone 101 mit Hilfe eines Connectivity-Graphen (Fig.2b, 210) ausgewählt und allokiert.

Nachdem ein Roboter ein oder mehrere Polygone allokiert hat, beginnt er diese zu reinigen.

Wenn ein Roboter Polygone allokiert oder gereinigt hat, so muss er dies natürlich den anderen Roboter mitteilen, da diese diese Polygone sonst auch allokieren und reinigen würden.

Die ist jedoch nicht immer möglich, da die einzelnen Roboter nicht immer miteinander kommunizieren können. Im folgenden wird davon ausgegangen, dass zwei Roboter miteinander kommunizieren können, wenn ihr Kommunikationsabstand kleiner als ein vorgegebener Abstand ist.

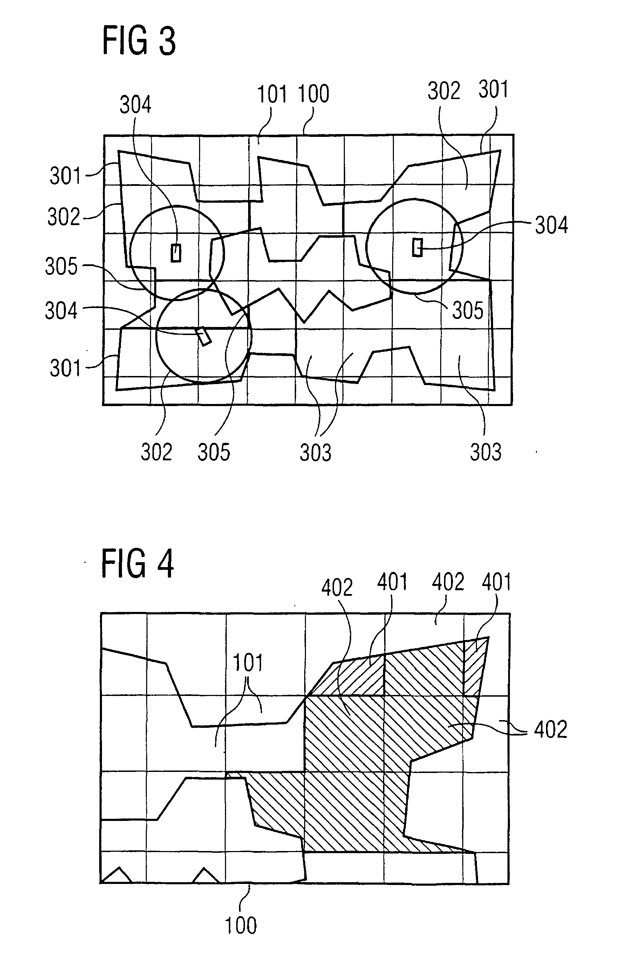

Der vorgegebene Kommunikationsabstand stellt hierbei einen Kommunikationsradius eines Roboters (Fig.3, 305) dar.

Die Arbeit eines Roboters ist beendet, wenn er weiß, dass alle Polygone allokiert sind, und wenn er alle von ihm allokierten Polygone gereinigt hat.

Da bei der Vorgehensweise ein Zusammentreffen und damit im schlimmsten Fall ein Kollidieren von Robotern möglich ist, ist eine Kollisionsvermeidung von großer Bedeutung. Für die Kollisionsvermeidung wird ein spezielles dezentrales Kollisionsvermeidungsverfahren, welches in [14] beschrieben wird, verwendet.

Mögliche Erweiterungen bzw. Alternativen zu dem Ausführungsbeispiel sind nachfolgend beschrieben.

Aufteilung in Polygone

Der aufzuteilende Raum 100 wird mit einem Gitter 102 überlagert (Fig.1), wobei eine Menge von Polygonen 101 erzeugt wird.

Auf Basis dieser Polygone 101 wird der Raum unter den Robotern aufgeteilt, indem die Roboter nach und nach die einzelnen Polygone 101 allokieren und reinigen.

Erzeugen eines Connectivity-Graphen (Fig.2a u. b)

Ein Connectivity-Graph 210 wird erzeugt indem für jedes Polygon 101 ein Knoten 201 angelegt wird und für jedes Polygonpaar 202-203, welches eine gemeinsame Kante 204 hat, eine Kante 206 angelegt wird. Der Connectivity-Graph 210 gibt Aufschluss darüber, wie die einzelnen Polygone 101 untereinander verbunden sind.

An den Knoten 201 im Connectivity-Graphen werden Informationen darüber gespeichert, ob ein Polygon bereits allokiert ist und ob ein Polygon 101 bereits gereinigt wurde.

Ein Connectivity Graph 210 ist ein in der Robotik bekanntes Konzept [9], welcher jedoch hauptsächlich für Navigationszwecke verwendet wird.

Auswahl der zu allokierenden Polygone

Die Auswahl der Polygone, welche ein Roboter allokiert, erfolgt nach zwei Prinzipien. Zum einen achten die Roboter immer darauf, dass sie ein paar zu bearbeitende Polygone auf Vorrat haben.

Zu bearbeitende Polygone sind Polygone welche allokiert wurden, aber noch nicht vollständig bearbeitet wurden. Zum anderen werden zusätzlich weitere Polygone hinzugenommen, wenn es günstig erscheint.

Eine Einschränkung ist, dass ein Polygon grundsätzlich nur allokiert werden kann, wenn es sich in Reichweite des jeweiligen Roboters befindet, d.h. ein Roboter muss sich näher als ein vorgegebener Zuweisungsabstand an dem Mittelpunkt des Polygons befinden.

Bei geeigneter Wahl des Kommunikationsabstands sowie des Zuweisungsabstands wird sichergestellt, dass zwei Roboter, welche zur gleichen Zeit das Polygon allokieren wollen, miteinander kommunizieren können.

Falls ein Roboter kein zu bearbeitendes Polygon mehr hat und kein neues allokieren kann, weil sich keines in Reichweite befindet, so fährt der Roboter auf ein neues zu.

Allokation auf Vorrat (Fig.3)

Da ein Roboter immer ein paar Polygone auf Vorrat allokiert 302, beginnt er neue zu allokieren, sobald die Anzahl der zu bearbeitenden Polygone 302 unter eine bestimmte Schwelle fällt.

Eine Einschränkung dabei ist, dass er nur neue Polygone allokiert falls, der Bereich der zu bearbeitenden Polygone zusammenhängend ist. Diese Einschränkung ist nötig, um ein zu stark zerklüftetes zu bearbeitendes Gebiet zu vermeiden.

Die Auswahl der neu zu allokierenden Polygone erfolgt nach folgenden Kriterien:

a) Es werden nur Polygone allokiert, welche nicht bereits von anderen Robotern (oder dem Roboter selbst) allokiert wurden.

b) Polygone müssen mit den bereits allokierten Polygonen zusammenhängen.

c) Die neu allokierten Polygone sollten, mit den gerade bearbeiteten Polygonen zusammen, einen möglichst kleinen Durchmesser haben. Dies vermindert einerseits die Gefahr einer Kollision mit anderen Robotern [5], [6], [7] und begünstigt andererseits die Reinigung, da dabei ein kompaktes Gebiet von Vorteil ist.

Sonderallokation (Fig.4)

Die Sonderallokation dient im wesentlichen dazu isolierte Polygone 401 zu vermeiden. Ein Polygon gilt als isoliert, wenn es kein unallokiertes Nachbarpolygon 402 mehr besitzt.

Falls derart isolierte Polygone 401 nicht gesondert behandelt würden, könnte es passieren, dass alle Polygone 101 in der Nachbarschaft eins isolierten Polygons 401 bereits gereinigt sind, das isolierte Polygon 401 aber nicht. Dies wiederum bedeutet, dass evtl. ein Roboter einen großen Umweg fahren muss, um das isolierte Polygon 401 schließlich doch noch zu bearbeiten.

Falls ein Roboter also feststellt, dass sein gerade bearbeitetes Gebiet an ein isoliertes Polygon 401 grenzt, allokiert er es.

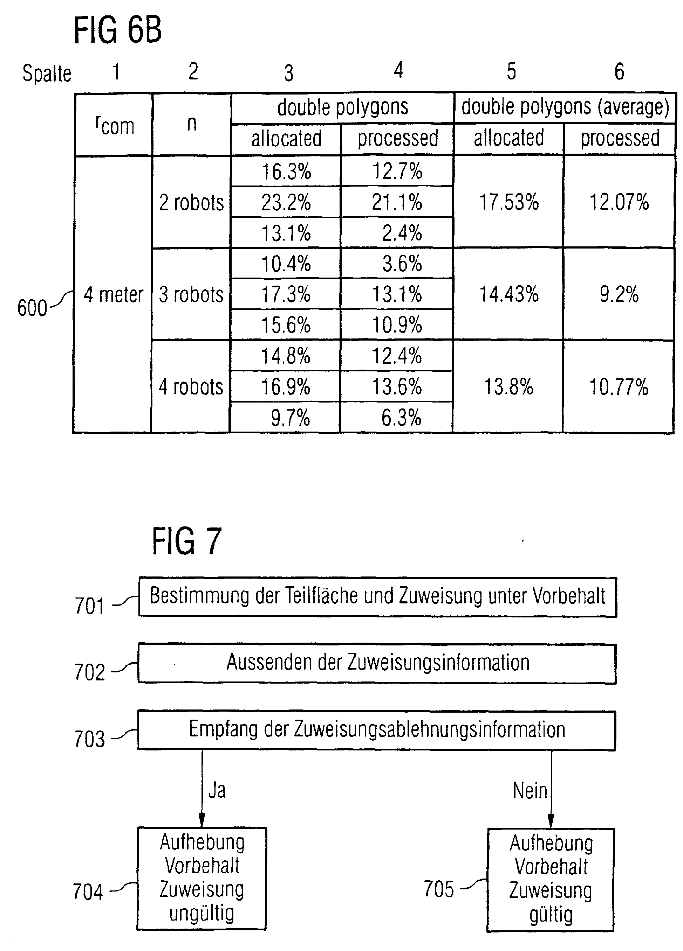

Allokation eines Polygons (Fog.3 u. Fig.7)

Falls nun ein Roboter ein Polygon zur Allokation ausgewählt hat 701, so muss er sich mit allen anderen Robotern, die das Polygon auch allokieren möchten, absprechen. Dies wird durch ein im nachfolgenden beschriebenes "Allokations-Vorbehalt-Verfahren" (AVV) realisiert (Fig.7, 701 bis 705).

Dass die Roboter in diesem Fall miteinander kommunizieren können, wird dadurch sichergestellt, dass sich das Polygon zur Allokation in Reichweite befinden muss.

Die hier gewählte Allokationsstrategie bzw. das AVV basiert auf eine Mischung aus einem Wahlalgorithmus [10] und einem Contract Net Protocol [11].

Sie umfasst folgende Schritte:

a) Ein Roboter, der ein Polygon allokieren möchte 701, sendet an alle anderen Roboter, mit denen er kommunizieren kann, eine AllocationRequest-Nachricht 702. Die Nachricht enthält die ID des Polygons, das er allokieren möchte, und einen Importance-Value (IV), der angibt wie wichtig ihm diese Allokation ist.

Der IV wird wie folgt ermittelt:

$$IV(poly) = 1 - \frac{\sum\limits_{p \in SP} \dfrac{min(dist(p, poly), MAXDIST)}{MAXDIST}}{|SP|} \qquad (1)$$

wobei SP eine Anzahl von erzeugten Polygone, dist(..., ...) eine Funktion zur Ermittlung des Abstandes zwischen zwei Polygonmittelpunkte, min (...) eine Funktion zur Ermittlung eines Minimums, I...I eine Betragsfunktion, MAXDIST ein maximaler Abstand zwischen zwei Polygonmittelpunkte und poly bzw. p ein Index für ein Polygon ist.

b) Wenn ein Roboter eine AllocationRequest-Nachricht erhält,

- sendet er eine AllocationRefuse-Nachricht 703, 704, wenn er selbst bereits eine AllocationRequest-Nachricht für das gleiche Polygon ausgesendet hat und sein IV größer als der IV der empfangenen AllocationRequest-Nachricht ist (bei gleichen IV wird eine Entscheidung über die IDs der Roboter herbeigeführt),

- sendet er eine AllocationAccept-Nachricht 703, 705, wenn er selbst bereits eine AllocationRequest-Nachricht für das gleiche Polygon ausgesendet hat und sein IV kleiner als der IV der empfangenen AllocationRequest-Nachricht ist und

- sendet er eine AllocationAccept-Nachricht 703, 705, wenn er selbst keine AllocationRequest-Nachricht für das Polygon ausgesendet hat.

c) Wenn ein Roboter eine AllocationRefuse-Nachricht erhält, dann weiser, dass seine Allokation nicht zum Ziel führen kann und bricht sie ab 704.

d) Wenn ein Roboter zu allen ausgesendeten AllocationRequest-Nachrichten AllocationAccept-Nachrichten erhält, dann ist die Allokation erfolgreich und ist beendet. Entsprechendes gilt, wenn der Roboter keine AllocationRefuse-Nachricht erhält 703, 705 (s. unten).

e) Nachdem ein Roboter ein neues Polygon allokiert hat, teilt er es allen anderen mit (s. Weitergabe von Informationen).

Zu beachten ist ferner, dass sich während einer ablaufenden Allokation die Menge der Roboter, die and der Allokation teilnehmen, ändern kann. Es können beispielsweise neue Roboter in Kommunikationsreichweite kommen oder sich bereits bekannte zu weit entfernen.
Dies muss natürlich bei der oben beschriebenen Allokationsstrategie bzw. bei dem AVV zusätzlich noch beachtet werden. Es müssen also eventuell an neu auftauchende Roboter weitere AllocationRequest-Nachrichten (Punkt a)) gesendet werden oder es darf eventuell nicht auf alle AllocationAccept-Nachrichten (Punkt d)) gewartet werden 703, 705.

Weitergabe von Informationen (Fig.3)

Da die einzelnen Roboter wegen des beschränkten Kommunikationsabstands 305 nicht immer miteinander kommunizieren können, entwickelt jeder Roboter im Laufe der Bearbeitung bzw. Reinigung des Raums seine eigene lokale Sicht bezüglich allokierter und gereinigter Polygone.
Falls beispielsweise ein Roboter ein Polygon allokiert und ein anderer Roboter in diesem Moment nicht in Kommunikationsreichweite ist, so weiß der andere Roboter natürlich nichts von der Allokation. Er hat also eine andere Sichtweise.
Um die lokalen Sichten der Roboter abzugleichen, tauschen sie Informationen über allokierte 302 und gereinigte 301 Bereiche aus, sobald sie miteinander kommunizieren können. Sie gleichen dadurch ihre lokalen Sichten ab und entwickeln eine gemeinsame Sicht.
Je kleiner der Kommunikationsradius 305 ist, desto seltener können die Roboter miteinander kommunizieren und desto stärker weichen die einzelnen lokalen Sichten der Roboter voneinander ab.
Wenn die lokalen Sichten zu stark voneinander abweichen, dann führt das dazu, dass Polygone mehrfach allokiert und gereinigt werden.
Im folgenden werden Erweiterungen und Alternativen zu dem Ausführungsbeispiel beschrieben.

a) die Einführung von Treffpunkten, an denen sich die Roboter in regelmäßigen Abständen treffen, um ihre lokalen Sichten abzugleichen,

b) der Einsatz eines speziellen Roboters, der nicht reinigt, sondern regelmäßig zwischen den anderen Robotern hin und her fährt, um Informationen zu verteilen,

c) die Freigabe eines bereits allokierten Polygons, wenn ein anderer Roboter mit seiner Arbeit bereits fertig ist und dieses Polygon deshalb bearbeiten könnte,

d) die dynamische Anpassung der Anzahl der Polygone die auf Vorrat allokiert werden, d.h. wenn insgesamt nur noch sehr wenig Polygone zu allokieren sind, werden weniger Polygone auf Vorrat allokiert (dadurch werden die Roboter dann alle fast gleichzeitig fertig.

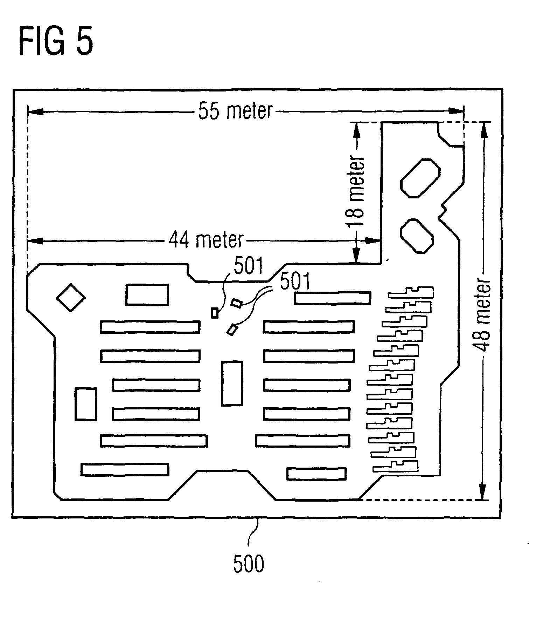

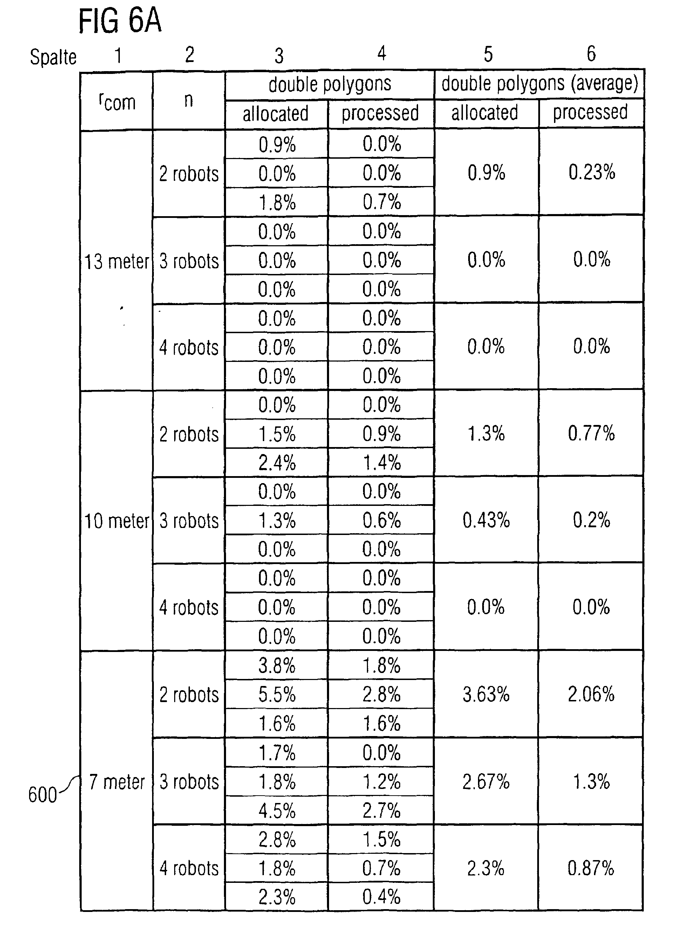

Simulation und Simulationsergebnisse (Fig.5 u. Fig.6)

Unter Punkt "Weitergabe von Informationen" wurde dargestellt, dass die eingeschränkten Kommunikationsmöglichkeiten der Roboter zu verschiedene lokalen Sichten der Roboter führen, was wiederum in unnötiger Arbeit resultieren kann.

Um festzustellen wie groß der Einfluss der lokalen Sichten auf die Reinigungsleistung ist, wurden einige Simulationen durchgeführt.

Als Grundlage dafür diente ein CAD-Plan 500 eines großen Supermarktes (Fig. 5). Der Supermarkt ist in Fig.5 mit drei (Reinigungs-)Robotern 501 dargestellt.

Es wurden für verschiedene Kommunikationsradien und Roboteranzahlen jeweils drei Simulationen durchgeführt.

Fig.6 zeigt tabellarisch die Ergebnisse der Simulationen, wobei die ersten beiden Spalten 1 und 2 der Tabelle 600 den jeweiligen Kommunikationsradius und die jeweilige Anzahl an Robotern darstellen.

In Spalte 3 und 4 der Tabelle 600 ist der Anteil an doppelt allokierten und doppelt gereinigten Polygonen angegeben. Dabei sind die Werte immer auf die gesamte zu reinigende Fläche bezogen. Die letzten beiden Spalten 5 und 6 der Tabelle 600 zeigen die gemittelten Werte der drei Simulationen.

Die Tabelle 600 in Fig.6 lässt erkennen, dass der Anteil an doppelter Arbeit steigt, wenn der Kommunikationsradius oder die Anzahl an Robotern reduziert wird. Wenn der Kommunikationsradius kleiner ist, dann können die Roboter nicht so oft miteinander kommunizieren. Wenn mehr Roboter verwendet werden, dann verteilen sich die Informationen schneller.

Bei dem beschriebenen Verfahren handelt es sich um ein völlig dynamisches Verfahren. Die Aufteilung des Raums erfolgt komplett zur Laufzeit.

Des weiteren liegt dem Verfahren ein völlig dezentraler Ansatz zugrunde. Es werden weder zentrale Komponenten benötigt, noch bedarf es einer globalen Koordination.

Das Verfahren setzt kein globales Kommunikationsnetz voraus. Durch die eingeschränkten Kommunikationsfähigkeiten der Roboter entsteht schlimmstenfalls ein Mehraufwand, welcher sich jedoch selbst bei ungünstigen Bedingungen in Grenzen hält. Die Simulationsergebnisse belegen das.

In diesem Dokument sind folgende Schriften zitiert:

[1] H. Endres, W. Feiten, and G. Lawitzky, Field Test of a Navigation System: Autonomous Cleaning in Supermarkets, Int. Conf. on Robotics and Automation (ICRA), pp. 1779-1781, 1998

[2] S. Hert and V. Lumelsky, Polygon Area Decomposition for Multiple-Robot Workspace Division, Special Issue of International Journal of Computational Geometry and Applications on Applied Computational Geometry, vol. 8, no. 4, pp. 437-466, 1998

[3] H. Bast and S. Hert, The Area Partitioning Problem, Proceedings of the 12th Canadian Conference on Computational Geometry, pp. 163-171, Fredericton, New Brunswick, 2000

[4] M. W. Bern, S. A. Mitchell, and J. Ruppert, Linear-size nonobtuse triangulation of polygons, Discrete and Computational Geometry}, vol. 14, pp. 411-428, 1995

[5] I. T. Christou and R. R. Meyer, Optimal Equipartition of Rectangular Domains for Parallel Computation, Journal of Global Optimization, vol. 8, pp. 15-34, January, 1996

[6] I. T. Christou, Distributed Genetic Algorithms for Partitioning Uniform Grids, University of Wisconsin Madison, Dept. of Computer Sciences Technical Report MP-TR-96-09, Madison, Wisconsin, 1996

[7] J. Yackel, R. R. Meyer, and I. T. Christou, Minimum Perimeter Domain Assignment, Mathematical Programming, vol. 78, no. 2, pp. 283-303, Aug. 1997.

[8] S. Hert and B. Richards, Multiple-Robots Motion Planning = Parallel Processing + Geometry, 2001

[9] J. C. Latombe, Robot Motion Plannig, Kluwer Academic Publishers, Boston, 1991

[10] E. Chang and R. Roberts, An Improved Algorithm for Decentralized Extrema-finding in Circular Configurations of Processes, Communications of the ACM, vol. 22, pp. 281-283, 1979

[11] R. G. Smith, The Contract Net Protocol: High-level Communication and Control in a Distributed Problem Solver, In IEEE Transactions on Computers, number 12 in C-29, pp. 1104-1113, 1980

[12] Arkin E.M. et al., "Approximation Algorithms for Lawn Mowing and Milling", Angewandte Mathematik und Informatik, Universität zu Köln, Report No. 97.255, 1997

[13] DE 198 04 195 Al.

[14] M. Jäger et al., "Dezentralized Collision Avoidance, Deadlock Detection and Deadlock Resolution for Multiple Mobile Robots", Int. Conf. On Intelligent Robots and Systems (IROS), voraus. 2001

**Patentansprüche**

1. Verfahren zur Zuweisung einer Teilfläche einer in mehrere Teilflächen aufgeteilten Gesamtfläche an eine von mehreren zusammenwirkenden, mobilen Einheiten,

   - bei dem eine Teilfläche der in mehrere Teilflächen aufgeteilten Gesamtfläche bestimmt und der einen von den mehreren mobilen Einheiten unter einem Vorbehalt zugewiesen wird,
   - bei dem die eine von den mehreren mobilen Einheiten eine Zuweisungsinformation aussendet, welche Zuweisungsinformation die Zuweisung der Teilfläche der in mehrere Teilflächen aufgeteilten Gesamtfläche an die eine von den mehreren mobilen Einheiten anzeigt,
   - bei dem der Vorbehalt aufgehoben und die Zuweisung der Teilfläche gültig wird, wenn die eine von den mehreren mobilen Einheiten keine Zuweisungsablehnungsinformation von mindestens einer weiteren von den mehreren mobilen Einheiten empfängt, welche Zuweisungsablehnungsinformation eine Ablehnung der Zuweisung der Teilfläche anzeigt, andernfalls der Vorbehalt aufgehoben und die Zuweisung der Teilfläche ungültig wird.

2. Verfahren nach Anspruch 1,
   bei dem die Bestimmung und/oder die Zuweisung der Teilfläche unter Vorbehalt erfolgt, wenn die eine von den mehreren mobilen Einheiten einen vorgebbaren Zuweisungsabstand oder einen geringeren Abstand als den vorgebaren Zuweisungsabstand zu der Teilfläche aufweist.

3. Verfahren nach Anspruch 1 oder 2,
   bei dem die Bestimmung und/oder die Zuweisung der Teilfläche unter Vorbehalt durch Anforderung der Teilfläche durch die eine von den mehreren mobilen Einheiten erfolgt.

4. Verfahren nach einem der vorangehenden Ansprüche,
   bei dem die Bestimmung und/oder Zuweisung der Teilfläche unter Vorbehalt während einer Bearbeitung von weiteren Teilflächen der Gesamtfläche durch die mehreren mobilen Einheiten erfolgt.

5. Verfahren nach einem der vorangehenden Ansprüche,
   bei dem die Bestimmung der einen von den mehreren mobilen Einheiten zuzuweisenden Teilfläche unter Verwendung eines Connectivity-Graphen erfolgt.

**6.** Verfahren nach einem der vorangehenden Ansprüche,
bei dem die Zuweisungsinformation eine Wichtigkeitsinformation der zuzuweisenden Teilfläche aufweist, welche beschreibt, wie wichtig die Zuweisung der zuzuweisenden Teilfläche für die eine von den mehreren mobilen Einheiten ist.

**7.** Verfahren nach einem der vorangehenden Ansprüche,
bei dem die der einen von den mehreren mobilen Einheiten zugewiesene Teilfläche mit weiteren der einen von den mehreren mobilen Einheiten zugewiesenen Teilflächen zu einem Bearbeitungsgebiet zusammengefasst wird.

**8.** Verfahren nach Anspruch 7,
bei dem die unter Vorbehalt zuzuweisende Teilfläche derart bestimmt wird, dass die Bearbeitungsfläche ein möglichst kompaktes Gebiet ergibt.

**9.** Verfahren nach Anspruch 7 oder 8,
bei dem unter Verwendung eines Bahnplanungsverfahren eine Bearbeitungsbahn für die Bearbeitungsfläche ermittelt wird.

**10.** Verfahren nach einem der vorangehenden Ansprüche,
bei dem jede der mehreren mobilen Einheiten eine Karte der Gesamtfläche speichert, in welcher mindestens die der jeweiligen mobilen Einheit zugewiesenen Teilflächen eingetragen werden.

**11.** Verfahren nach Anspruch 10,
bei dem zumindest in die Karte der einen von den mehreren mobilen Einheiten die zugewiesene Teilfläche eingetragen wird.

**12.** Verfahren nach einem der vorangehenden Ansprüche,
bei dem die mehreren mobilen Einheiten Informationen miteinander austauschen, wenn jeweils zwei von den mehreren mobilen Einheiten einen vorgebbaren Kommunikationsabstand oder einen geringeren Abstand als den vorgebaren Kommunikationsabstand zueinander aufweisen (Vorteil kein globale Kommunikationsnetz nötig).

**13.** Verfahren nach Anspruch 12,
bei dem im Rahmen des Informationsaustausches ein Kartenabgleich der Karten der mehreren mobilen Einheiten durchgeführt wird.

**14.** Verfahren nach einem der vorangehenden Ansprüche,
bei dem ein Einigungsverfahren durchgeführt wird, wenn die der einen von den mehreren mobilen Einheiten zugewiesene Teilfläche bereits einer anderen von den mehreren mobilen Einheiten zugewiesen worden ist.

**15.** Verfahren nach einem der vorangehenden Ansprüche, eingesetzt bei einer Reinigung einer Gesamtfläche durch mehrere Reinigungsroboter, wobei die mehreren mobilen Einheiten die Reinigungsroboter sind und die zureinigende Gesamtfläche die Gesamtfläche ist.

**16.** Anordnung zur Zuweisung einer Teilfläche einer in mehrere Teilflächen aufgeteilten Gesamtfläche an eine von mehreren mobilen Einheiten,

- mit einer Zuweisungseinheit, mit welcher eine Teilfläche der in mehrere Teilflächen aufgeteilten Gesamtfläche bestimmbar und der einen von den mehreren mobilen Einheiten unter einem Vorbehalt zuweisbar ist,
- mit einer Kommunikationseinheit, mit welcher eine Zuweisungsinformation aussendbar ist, welche Zuweisungsinformation die Zuweisung der Teilfläche der in mehrere Teilflächen aufgeteilten Gesamtfläche an die eine von den mehreren mobilen Einheiten anzeigt,
- mit der Zuweisungseinheit, welche derart eingerichtet ist, dass der Vorbehalt aufhebbar ist und die Zuweisung der Teilfläche gültig wird, wenn die eine von den mobilen Einheiten keine Zuweisungsablehnungsinformation von mindestens einer weiteren von den mehreren mobilen Einheiten empfängt, welche Zuweisungsablehnungsinformation eine Ablehnung der Zuweisung der Teilfläche anzeigt, andernfalls der Vorbehalt aufhebbar ist und die Zuweisung der Teilfläche ungültig wird.

**17.** Computerprogramm mit Programmcode-Mitteln, um alle Schritte gemäß Anspruch 1 durchzuführen, wenn das Programm auf einem Computer ausgeführt wird.

18. Computerprogramm mit Programmcode-Mitteln gemäß Anspruch 17, die auf einem computerlesbaren Datenträger gespeichert sind.

19. Computerprogramm-Produkt mit auf einem maschinenlesbaren Träger gespeicherten Programmcode-Mitteln, um alle Schritte gemäß Anspruch 1 durchzuführen, wenn das Programm auf einem Computer ausgeführt wird.

## Revendications

1. Procédé pour l'attribution d'une surface partielle d'une surface globale répartie en plusieurs surfaces partielles à une parmi les plusieurs unités mobiles coopérantes,

   - dans lequel une surface partielle de la surface globale répartie en plusieurs surfaces partielles est déterminée et est attribuée avec une réserve à l'une des plusieurs unités mobiles,
   - dans lequel une des plusieurs unités mobiles envoie une information d'attribution, laquelle information d'attribution indique l'attribution de la surface partielle de la surface globale répartie en plusieurs surfaces partielles à une des plusieurs unités mobiles,
   - dans lequel la réserve est supprimée et l'attribution de la surface partielle devient valable si l'une des plusieurs unités mobiles ne reçoit pas d'information de refus d'attribution d'au moins une autre des plusieurs unités mobiles, laquelle information de refus d'attribution indique un refus d'attribution de la surface partielle, autrement la réserve est supprimée et l'attribution de la surface partielle devient non valable.

2. Procédé selon la revendication 1,
   dans lequel la détermination et/ou l'attribution de la surface partielle s'effectue sous réserve si une des plusieurs unités mobiles présente une distance d'attribution prédéfinissable ou une distance plus faible que la distance d'attribution prédéfinissable à la surface partielle.

3. Procédé selon la revendication 1 ou 2,
   dans lequel la détermination et/ou l'attribution de la surface partielle s'effectue sous réserve par demande de la surface partielle par l'une des plusieurs unités mobiles.

4. Procédé selon l'une quelconque des revendications précédentes,
   dans lequel la détermination et/ou l'attribution de la surface partielle s'effectue sous réserve pendant un traitement d'autres surfaces partielles de la surface globale par les plusieurs unités mobiles.

5. Procédé selon l'une quelconque des revendications précédentes,
   dans lequel la détermination d'une surface partielle à attribuer à l'une des plusieurs unités mobiles s'effectue avec l'utilisation d'un graphe de connectivité.

6. Procédé selon l'une quelconque des revendications précédentes,
   dans lequel, l'information d'attribution présente une information sur l'importance de la surface partielle à attribuer qui décrit quelle est l'importance de l'attribution de la surface partielle à attribuer pour l'une des plusieurs unités mobiles.

7. Procédé selon l'une quelconque des revendications précédentes,
   dans lequel la surface partielle à attribuer à l'une des plusieurs unités mobiles est regroupée avec d'autres surfaces partielles attribuées à l'une des plusieurs unités mobiles pour former une zone de traitement.

8. Procédé selon la revendication 7,
   dans lequel la surface partielle attribuée sous réserve est déterminée de telle sorte que la surface de traitement donne une zone la plus compacte possible.

9. Procédé selon la revendication 7 ou 8,
   dans lequel une trajectoire de traitement pour la surface de traitement est déterminée en utilisant un procédé de planification de trajectoire.

10. Procédé selon l'une quelconque des revendications précédentes,
    dans lequel chacune des plusieurs unités mobiles mémorise une carte de la surface globale sur laquelle sont

**EP 1 434 671 B1**

reportées au moins les surfaces partielles attribuées à l'unité mobile respective.

11. Procédé selon la revendication 10,
dans lequel la surface partielle attribuée est reportée au moins sur la carte de l'une des plusieurs unités mobiles.

12. Procédé selon l'une quelconque des revendications précédentes,
dans lequel les plusieurs unités mobiles échangent des informations entre elles lorsque respectivement deux des plusieurs unités mobiles présentent une distance de communication prédéfinissable ou une distance plus faible que la distance de communication prédéfinissable entre elles (avantage pas de nécessité d'un réseau de communication global).

13. Procédé selon la revendication 12,
dans lequel un ajustage des cartes des plusieurs unités mobiles est effectué dans le cadre de l'échange d'information.

14. Procédé selon l'une quelconque des revendications précédentes,
dans lequel une procédure d'accord est mise en oeuvre lorsque la surface partielle attribuée à l'une des plusieurs unités mobiles a été déjà attribuée à une autre des plusieurs unités mobiles.

15. Procédé selon l'une quelconque des revendications précédentes, utilisé lors d'un nettoyage d'une surface globale par plusieurs robots de nettoyage, les plusieurs unités mobiles étant les robots de nettoyage et la surface globale à nettoyer étant la surface globale.

16. Agencement pour l'attribution d'une surface partielle d'une surface globale répartie en plusieurs surfaces partielles à une des plusieurs unités mobiles,

- avec une unité d'attribution, avec laquelle une surface partielle de la surface globale répartie en plusieurs surfaces partielles peut être déterminée et qui peut être attribuée à l'une des plusieurs unités mobiles avec une réserve,
- avec une unité de communication avec laquelle une information d'attribution peut être envoyée, laquelle information d'attribution indique l'attribution de la surface partielle de la surface globale répartie en plusieurs surfaces partielles à une des plusieurs unités mobiles,
- avec l'unité d'attribution qui est aménagée de telle sorte que la réserve peut être supprimée et l'attribution de la surface partielle devient valable, si l'une des unités mobiles ne reçoit pas d'information de refus d'attribution d'au moins une autre des plusieurs unités mobiles, laquelle information de refus d'attribution indique un refus d'attribution de la surface partielle, autrement la réserve peut être supprimée et l'attribution de la surface partielle devient non valable.

17. Programme informatique avec des moyens de codage de programme afin de mettre en oeuvre toutes les étapes selon la revendication 1 si le programme est exécuté sur un ordinateur.

18. Programme informatique avec des moyens de codage de programme selon la revendication 17, qui sont mémorisés sur un support de données pouvant être lu par un ordinateur.

19. Produit de programme informatique avec des moyens de codage de programme mémorisés sur un support pouvant être lu par la machine, afin de mettre en oeuvre toutes les étapes selon la revendication 1 lorsque le programme est exécuté sur un ordinateur.

**Claims**

1. A method for assigning a part domain of a whole domain which is divided into a plurality of part domains to one of a plurality of interacting mobile units,

- wherein a part domain of the whole domain which is divided into a plurality of part domains is specified and provisorily assigned to the one of the plurality of mobile units,
- wherein the one of the plurality of mobile units transmits an assignment notification which indicates the assignment of the part domain of the whole domain which is divided into a plurality of part domains to the one of the plurality of mobile units,

- wherein the proviso is removed and the assignment of the part domain becomes valid if the one of the plurality of mobile units does not receive an assignment rejection notification from at least one other of the plurality of mobile units, said assignment rejection notification indicating a rejection of the assignment of the part domain, otherwise the proviso is removed and the assignment of the part domain becomes invalid.

2. The method as claimed in claim 1,
   wherein the provisory specification and/or assignment of the part domain is done when the one of the plurality of mobile units is at a predeterminable assignment distance or at less than the predeterminable assignment distance in relation to the part domain.

3. The method as claimed in claim 1 or 2,
   wherein the provisory specification and/or assignment of the part domain is done by means of a request for the part domain by the one of the plurality of mobile units.

4. The method as claimed in one of the preceding claims,
   wherein the provisory specification and/or assignment of the part domain is done during a processing of other part domains of the whole domain by the plurality of mobile units.

5. The method as claimed in one of the preceding claims,
   wherein the part domain which is to be assigned to the one of the plurality of mobile units is specified using a connectivity graph.

6. The method as claimed in one of the preceding claims,
   wherein the assignment notification includes an importance notification for the part domain to be assigned, said importance notification describing how important the assignment of the part domain to be assigned is for the one of the plurality of mobile units.

7. The method as claimed in one of the preceding claims,
   wherein the part domain which is assigned to the one of the plurality of mobile units is combined with further part domains which are assigned to the one of the plurality of mobile units, thereby forming a processing area.

8. The method as claimed in claim 7,
   wherein the part domain which is to be provisorily assigned is specified in such a way that the processing domain results in an area which is as compact as possible.

9. The method as claimed in claim 7 or 8,
   wherein a processing path is determined for the processing domain using a path planning method.

10. The method as claimed in one of the preceding claims,
    wherein each of the plurality of mobile units stores a map of the whole domain, in which are entered at least the part domains which are assigned to the mobile unit concerned.

11. The method as claimed in claim 10,
    wherein the assigned part domain is entered into at least the map of the one of the plurality of mobile units.

12. The method as claimed in one of the preceding claims,
    wherein the plurality of mobile units exchange notifications with each other whenever two of the plurality of mobile units are at a predeterminable communication distance, or at less than the predeterminable communication distance, in relation to each other (with the advantage that a global communication network is not required).

13. The method as claimed in claim 12,
    wherein a map synchronization for the maps of the plurality of mobile units is carried out in the context of the exchange of notifications.

14. The method as claimed in one of the preceding claims,
    wherein an agreement method is carried out if the part domain which is assigned to the one of the plurality of mobile units has already been assigned to another of the plurality of mobile units.

**15.** The method as claimed in one of the preceding claims, said method being used in a cleaning of a whole domain by a plurality of cleaning robots, wherein the plurality of mobile units are the cleaning robots and the whole domain to be cleaned is the whole domain.

**16.** An arrangement for assigning a part domain of a whole domain which is divided into a plurality of part domains to one of a plurality of mobile units,

- having an assignment unit which allows the specification of a part domain of the whole domain which is divided into a plurality of part domains, and the provisory assignment of said part domain to the one of the plurality of mobile units,
- having a communication unit which allows the transmission of an assignment notification which indicates the assignment of the part domain of the whole domain which is divided into a plurality of part domains to the one of the plurality of mobile units,
- having the assignment unit which is configured in such a way that the proviso can be removed and the assignment of the part domain becomes valid if the one of the plurality of mobile units does not receive an assignment rejection notification from at least one other of the plurality of mobile units, said assignment rejection notification indicating a rejection of the assignment of this part domain,

otherwise the proviso can be removed and the assignment of this part domain becomes invalid.

**17.** A computer program having program code means in order to carry out all steps as claimed in claim 1 when the program is executed on a computer.

**18.** The computer program having program code means as claimed in claim 17, wherein said program code means are stored on a computer-readable data medium.

**19.** A computer program product having program code means which are stored on a machine-readable medium, in order to carry out all steps as claimed in claim 1 when the program is executed on a computer.

## FIG 1

## FIG 2A

## FIG 2B

## FIG 3

## FIG 4

## FIG 5

# FIG 6A

| Spalte | 1 | 2 | 3 | 4 | 5 | 6 |
|---|---|---|---|---|---|---|
| | $r_{com}$ | n | double polygons | | double polygons (average) | |
| | | | allocated | processed | allocated | processed |
| | 13 meter | 2 robots | 0.9% | 0.0% | 0.9% | 0.23% |
| | | | 0.0% | 0.0% | | |
| | | | 1.8% | 0.7% | | |
| | | 3 robots | 0.0% | 0.0% | 0.0% | 0.0% |
| | | | 0.0% | 0.0% | | |
| | | | 0.0% | 0.0% | | |
| | | 4 robots | 0.0% | 0.0% | 0.0% | 0.0% |
| | | | 0.0% | 0.0% | | |
| | | | 0.0% | 0.0% | | |
| | 10 meter | 2 robots | 0.0% | 0.0% | 1.3% | 0.77% |
| | | | 1.5% | 0.9% | | |
| | | | 2.4% | 1.4% | | |
| | | 3 robots | 0.0% | 0.0% | 0.43% | 0.2% |
| | | | 1.3% | 0.6% | | |
| | | | 0.0% | 0.0% | | |
| | | 4 robots | 0.0% | 0.0% | 0.0% | 0.0% |
| | | | 0.0% | 0.0% | | |
| | | | 0.0% | 0.0% | | |
| | 7 meter | 2 robots | 3.8% | 1.8% | 3.63% | 2.06% |
| | | | 5.5% | 2.8% | | |
| | | | 1.6% | 1.6% | | |
| | | 3 robots | 1.7% | 0.0% | 2.67% | 1.3% |
| | | | 1.8% | 1.2% | | |
| | | | 4.5% | 2.7% | | |
| | | 4 robots | 2.8% | 1.5% | 2.3% | 0.87% |
| | | | 1.8% | 0.7% | | |
| | | | 2.3% | 0.4% | | |

600

## FIG 6B

| Spalte | 1 | 2 | 3 | 4 | 5 | 6 |
|---|---|---|---|---|---|---|
| | $r_{com}$ | n | double polygons | | double polygons (average) | |
| | | | allocated | processed | allocated | processed |
| 600 | 4 meter | 2 robots | 16.3% | 12.7% | 17.53% | 12.07% |
| | | | 23.2% | 21.1% | | |
| | | | 13.1% | 2.4% | | |
| | | 3 robots | 10.4% | 3.6% | 14.43% | 9.2% |
| | | | 17.3% | 13.1% | | |
| | | | 15.6% | 10.9% | | |
| | | 4 robots | 14.8% | 12.4% | 13.8% | 10.77% |
| | | | 16.9% | 13.6% | | |
| | | | 9.7% | 6.3% | | |

## FIG 7

701 — Bestimmung der Teilfläche und Zuweisung unter Vorbehalt

702 — Aussenden der Zuweisungsinformation

703 — Empfang der Zuweisungsablehnungsinformation

Ja

Nein

704 — Aufhebung Vorbehalt Zuweisung ungültig

705 — Aufhebung Vorbehalt Zuweisung gültig